# EUROPÄISCHE PATENTANMELDUNG

(11) **EP 4 075 622 A1**
(43) Veröffentlichungstag der Anmeldung: **19.10.2022**
(21) Anmeldenummer: 21167986.5
(22) Anmeldetag: 13.04.2021
(51) Int. Cl.: H02J 3/00

(54) **ERMITTELN DER NETZTOPOLOGIE EINES STROMNETZES SOWIE REGELUNG EINES STROMNETZES**

(71) Anmelder: Siemens Aktiengesellschaft, 80333 München (DE)
(72) Erfinder: Duckheim, Mathias, 91052 Erlangen (DE); Werner, Thomas, 91126 Rednitzhembach (DE)

(57) **Zusammenfassung**

Es wird ein Verfahren zur Ermittlung einer Netztopologie eines Stromnetzes (1), insbesondere eines Mittel- und/oder Niederspannungsnetzes, an welchem mehrere Stromzähler (41) sowie mehrere Steuerboxen (42) angebunden sind, wobei die Steuerboxen (42) jeweils zugehörige Geodaten aufweisen, vorgeschlagen. Das Verfahren ist durch die folgenden Schritte gekennzeichnet:
- Einteilen des Stromnetzes (1) in mehrere räumliche Segmente (4) ;
- Zuordnen wenigstens einer der Steuerboxen (42) zu einem der räumlichen Segmente (4) mittels seiner Geodaten;
- Induzieren eines zeitlichen Leistungssignals in das Stromnetz (1) mittels der zugeordneten Steuerbox (42);
- Erfassen von Messsignalen der Stromzähler (41); und
- Zuordnen wenigstens eines der Stromzähler (41) zu dem räumlichen Segment (4) der Steuerbox (42), wobei das erfasste Messsignal des zugeordneten Stromzählers (41) mit dem induzierten Leistungssignal die vergleichsweise stärkste Korrelation aufweist.

Weiterhin betrifft die Erfindung ein Verfahren zur Regelung eines Stromnetzes (1).

## Beschreibung

Die Erfindung betrifft ein Verfahren gemäß dem Oberbegriff des Patentanspruches 1 sowie ein Verfahren gemäß dem Oberbegriff des Patentanspruches 8.

Typischerweise werden Niederspannungsnetze bisher ohne eine Automatisierungstechnik betrieben.

Niederspannungsnetze sind jedoch immer stärkeren Belastungen ausgesetzt, insbesondere durch Ladevorgänge von Elektrofahrzeugen oder durch Einspeisungen von dezentralen Stromerzeugungsanlagen, beispielsweise Photovoltaik-Anlagen. Ein Ausbau von bestehenden Niederspannungsnetze ist jedoch kostenintensiv und aufgrund fehlender Ressourcen oder Einschränkungen von Bauarbeiten durch Kommunalverwaltungen praktisch kaum umsetzbar.

Zur Lösung der genannten Herausforderungen können Automatisierungs- und Digitalisierungssysteme beitragen. Diese steuern und regeln den Betrieb der Niederspannungsnetze sowie die angeschlossenen Endkundenanlagen und können somit einen zuverlässigen Netzbetrieb ohne signifikanten Netzausbau sicherstellen.

Bekannte technische Lösungen für die genannten Steuer- und Regelungsaufgaben basieren auf Kenntnis von Systemdaten bezüglich des jeweiligen Niederspannungsnetzes, insbesondere auf seine Netztopologie, technische Eigenschaften der Leitungen und Kabel sowie Eigenschaften der angeschlossenen Anlagen.

Allerdings sind wichtige Informationen, wie beispielsweise die Netztopologie, das heißt beispielsweise die spezifischen Anordnungen und Verbindungen von Geräten und Leitungen des Netzes, typischerweise unbekannt oder liegen nicht in einer für eine Automatisierung zugänglichen Form vor.

Der vorliegenden Erfindung liegt die Aufgabe zugrunde, ein Verfahren zum Ermitteln einer Netztopologie, insbesondere einer unbekannten Netztopologie, eines Stromnetzes bereitzustellen.

Die Aufgabe wird durch ein Verfahren mit den Merkmalen des unabhängigen Patentanspruches 1 sowie durch ein Verfahren mit den Merkmalen des unabhängigen Patentanspruches 8 gelöst. In den abhängigen Patentansprüchen sind vorteilhafte Ausgestaltungen und Weiterbildungen der Erfindung angegeben.

Das erfindungsgemäße Verfahren zur Ermittlung einer Netztopologie eines Stromnetzes, insbesondere eines Mittel- und/oder Niederspannungsnetzes, an welchem mehrere Stromzähler sowie mehrere Steuerboxen angebunden sind, wobei die Steuerboxen jeweils zugehörige Geodaten aufweisen, ist wenigstens gekennzeichnet durch die folgenden Schritte:
- Einteilen des Stromnetzes in mehrerer räumliche Segmente;
- Zuordnen wenigstens einer der Steuerboxen zu einem der räumlichen Segmente mittels seiner Geodaten;
- Induzieren eines zeitlichen Leistungssignals in das Stromnetz mittels der zugeordneten Steuerbox;
- Erfassen von Messsignalen der Stromzähler; und
- Zuordnen wenigstens eines der Stromzähler zu dem räumlichen Segment der Steuerbox, wobei das erfasste Messsignal des zugeordneten Stromzählers mit dem induzierten Leistungssignal die vergleichsweise stärkste Korrelation aufweist.

Das erfindungsgemäße Verfahren und/oder eine oder mehrere Funktionen, Merkmale und/oder Schritte des erfindungsgemäßen Verfahrens und/oder einer seiner Ausgestaltungen können computergestützt sein.

Das Stromnetz ist bevorzugt ein Mittelspannungsnetz, besonders bevorzugt ein Niederspannungsnetz.

Die Netztopologie kann die Anordnung der mit dem Stromnetz assoziierten Geräte und deren Verbindungen untereinander bezeichnen, das heißt deren elektrotechnische Verschaltung. Insbesondere wird gemäß der vorliegenden Erfindung unter der Netztopologie des Stromnetzes die Zuordnung von Stromzählern, Feldgeräten, Edge-Devices und/oder Ortsnetzstation zu einer der Steuerboxen beziehungsweise dem zur Steuerbox zugehörigen räumlichen Segment verstanden. Hierbei ist es nicht erforderlich die gesamte Netztopologie des Stromnetzes vollständig zu erfassen. Gemäß der vorliegenden Erfindung ist es insbesondere ausreichend, wenn wenigstens einer oder mehreren Steuerboxen jeweils ein Stromzähler zugeordnet ist. Insbesondere ist es nicht erforderlich hierbei alle Steuerboxen oder alle Stromzähler zu berücksichtigen oder zu erfassen oder zuzuordnen. Mehrere Steuerboxen und Stromzähler sind ausreichend. Ein nahezu vollständiges Erfassen oder Ermitteln der Netztopologie kann jedoch vorgesehen sein.

Das Stromnetz beziehungsweise das räumliche Gebiet, über welches sich das Stromnetz erstreckt (Stromnetzgebiet oder Netzgebiet), wird in mehrere räumliche Segmente eingeteilt. Das Ermitteln der räumlichen Segmente und somit das Einteilen des Netzgebietes oder wenigstens eines Teils des Netzgebietes erfolgt besonders bevorzugt mittels Luftaufnahmen.

Die Steuerboxen weisen Geodaten auf. Somit ist ihre räumliche Lage, das heißt ihr Standort, insbesondere innerhalb des Stromnetzgebietes, bekannt. Somit können die Steuerboxen jeweils einem räumlichen Segment zugeordnet werden. Beispielsweise weisen Wohngebäude einer Siedlung jeweils eine solche Steuerbox, beispielsweise zum Steuern von Ladevorgängen für Elektroautos, auf. Auf Luftaufnahmen sind die einzelnen Wohngebäude trennbar. Hierbei können die räumlichen Segmente derart festgelegt werden, dass jedes der Segmente genau eines der Wohngebäude und/oder Bürogebäude umfasst. Mit anderen Worten werden die räumlichen Segmente gemäß der Siedlungsstruktur festgelegt beziehungsweise ermittelt.

Weiterhin sind Steuerboxen typischerweise in einigen Haushalten - nicht notwendigerweise in allen - angeordnet. Die Steuerboxen weisen typischerweise eine eindeutige Identifikationsnummer (ID) auf. Beispielsweise wird bei der Installation einer Steuerbox ein zugehöriger QR-Code erfasst und dadurch die zur Steuerbox zugehörigen Geodaten gespeichert. Dies kann mittels eines mobilen Endgerätes, beispielsweise mittels einer Applikation (APP) eines Smartphones erfolgen. Typischerweise sind die Steuerboxen dazu ausgebildet mehrere verschiedene Geräte zu steuern oder zu regeln, insbesondere Entnahmeleistungen von Ladeprozessen, beispielsweise von Elektrofahrzeugen, und/oder Einspeiseleistungen von Photovoltaik-anlagen. Die Steuerbox kann Messungen bezüglich aktueller Wirk- und/oder Blindleistungen gemeinsam mit ihren Geodaten bereitstellen, insbesondere für eine zentrale Regelungsvorrichtung.

Gemäß des vorliegenden Verfahrens wird an einer der Steuerboxen ein zeitliches Leistungssignal induziert. Mit anderen Worten speist die Steuerbox ein zeitabhängiges Leistungsprofil in das Stromnetz ein. Dies kann innerhalb eines festgelegten Zeitbereiches erfolgen.

Nach dem die Steuerbox das Leistungssignal in das Stromnetz induziert, das heißt eingespeist hat, erfasst der zur Steuerbox zugehörige Stromzähler ein Messsignal, das wenigstens teilweise auf dem induzierten Leistungssignal basiert. Auch die weiteren Stromzähler, die nicht der Steuerbox, die das Leistungssignal eingespeist hat, netztopologisch zugeordnet sind, erfassen grundsätzlich jeweilige Messsignale, jedoch stehen diese im schwächeren zeitlichen Zusammenhang mit dem durch die Steuerbox eingespeisten Leistungssignal. Allerdings sind zunächst die Messsignale der Stromzähler gesamtheitlich erforderlich, da zunächst unklar ist, welcher der Stromzähler der induzierenden Steuerbox zugeordnet beziehungsweise zu dieser und somit zum räumlichen Segment der Steuerbox netztopologisch zugehörig ist.

Gemäß der vorliegenden Erfindung wird die Zuordnung von Steuerbox und Stromzähler dadurch ermöglicht, dass jeweils eine Korrelation zwischen den Messsignalen der Stromzähler und dem induzierten Leistungssignal ausgebildet beziehungsweise ermittelt wird. Mit anderen Worten wird für einen Stromzähler die Korrelation zwischen seinem Messsignal und dem Leistungssignal berechnet. Dies wird für mehrere, insbesondere alle Stromzähler, die Messsignale bereitstellen, durchgeführt. Gemäß der vorliegenden Erfindung wird der Stromzähler der Steuerbox und somit dem räumlichen Segment der Steuerbox zugeordnet, dessen Messsignal die vergleichsweise stärkste Korrelation mit dem Leistungssignal aufweist. Hierbei bedeutet vergleichsweise, dass dieser beziehungsweise sein Messsignal unter allen ermittelten Korrelationen die stärkste oder höchste Korrelation mit dem Leistungssignal aufweist. Dadurch kann ein Stromzähler ermittelt und der Steuerbox zugeordnet werden. Gemäß dem vorliegenden Verfahren wird somit einer Steuerbox ein Stromzähler zugeordnet. Wird dies für mehrere Steuerboxen durchgeführt, so ist dadurch wenigstens ein Teil der Netztopologie des Stromnetzes ermittelt.

Das vorliegende Verfahren ist besonders bevorzugt für Stromnetze, insbesondere Mittel- und/oder Niederspannungsnetz, mit wenigstens teilweiser unbekannter Netztopologie im Rahmen einer Automatisierung verwendbar. Typischerweise liegt für Mittel- und/oder Niederspannungsnetzen kein Netzmodell vor, sodass durch das vorliegende Verfahren zumindest grundsätzliche Aspekte der Netztopologie erfassbar beziehungsweise ermittelbar sind.

Das vorliegende Verfahren ist zudem nahezu voll automatisiert auf ein neues Stromnetz anwendbar, die typischerweise mehrere Einheiten mit Steuerboxen aufweisen. Es entstehen bei der Inbetriebnahme des Stromnetzes, insbesondere eines Ortsnetzes, geringe Grenzkosten. Dadurch kann das vorliegende Verfahren ohne weiteren Parametrierungs- und Konfigurationsaufwand verwendet werden.

Weiterhin kann das Verfahren bereits bei einer einzigen Ortsnetzstation verwendet werden, ein komplexer Roll-out ist somit nicht erforderlich. Damit können Verteilnetzbetreiber die Lösung zunächst mit sehr wenig Aufwand testen und sukzessiv in ihren Mittel- und/oder Niederspannungsnetzen verwenden.

Das erfindungsgemäße Verfahren zur Regelung eines Stromnetzes, insbesondere eines Mittel- und/oder Niederspannungsnetzes, ist gekennzeichnet dadurch, dass das Stromnetz gemäß einer gemäß der vorliegenden Erfindung und/oder einer ihrer Ausgestaltungen ermittelten Netztopologie in räumliche Segmente mit Stromzählern und zugehörigen Steuerboxen eingeteilt wird, wobei das Regeln mittels für die räumlichen Segmente jeweils vorgesehenen Steuerungsbefehlen erfolgt, die derart ermittelt werden, dass Spannungsdifferenzen zwischen elektrotechnisch aufeinander folgenden räumlichen Segmenten kleiner oder gleich einem Schwellenwert sind.

Das erfindungsgemäße Verfahren zur Regelung des Stromnetzes kann mittels einer zentralen Regelungsvorrichtung durchgeführt werden, die Daten, insbesondere die Geodaten und die Messignale empfängt, bearbeitet und gemäß der vorliegenden Erfindung auswerten kann.

Der Regelung gemäß der vorliegenden Erfindung und/oder einer ihrer Ausgestaltungen wird somit die ermittelte Netztopologie des Stromnetzes zugrundgelegt. Durch die Einteilung in die räumlichen Segmente und der Kenntnis darüber, welche Steuerbox und welcher Stromzähler und gegebenenfalls welche Ortsnetzstation und welcher Abgang dem jeweiligen räumlichen Segment zugeordnet ist, können Spannungsspitzen vermieden und Spannungsdifferenzen zwischen den Segmenten und somit im Netzabschnitt insgesamt reduziert oder vermieden werden. Weiterhin erfolgt die Regelung autonom, das heißt ohne ein Eingreifen eines Netzbetreibers.

Das Ermitteln der Steuerungsbefehle, insbesondere von Leistungssteuerbefehlen, kann durch eine auf der Netztopologie aufbauende Zustandsschätzung erfolgen. Die Zustandsschätzung kann mittels eines entsprechend trainierten und ausgebildeten künstlichen neuronalen Netzes erfolgen. Beispielsweise erfasst ein Edge-Device einen erhöhten Leistungsfluss in einem Segment. Aus der ermittelten Netztopologie ist bekannt oder abschätzbar, welcher Abgang, welche Leitung und welche Steuerbox betroffen ist. Somit werden Steuerungsbefehle an die ermittelte Steuerbox übermittelt, die beispielsweise einen Ladevorgang eines Elektrofahrzeuges herunterregelt.

Die Steuerungsbefehle beziehungsweise Leistungsbefehle können bevorzugt derart festgelegt werden, dass die Spannungen innerhalb der durch die EN 50160 vorgeschriebenen Bänder verleiben.

Weiterhin können die Steuerungsbefehle mittels eines mathematischen Optimierungsverfahrens ermittelt werden, beispielsweise aus der Klasse der evolutionären Algorithmen, des bestärkten Lernens (englisch: Reinforcement Learning) und/oder durch geschlossene Optimierungen eines festgelegten Modells.

Als Optimierungsvariablen, die durch die Optimierung bezüglich ihrer Werte bestimmt werden, können Wirk- und/oder Blindleistungen, deren ermittelte Werte von der Regelung an die Steuerboxen übertragen werden, verwendet werden. Hieraus können für die Netzknoten die jeweilige Leistungseinspeisung beziehungsweise Leistungsentnahme ermittelt werden.

Eine mathematische Optimierung basiert auf einer Zielfunktion, die minimiert oder maximiert wird. Hierbei wird die Zielfunktion bevorzugt derart festgelegt, dass gewichtete Abweichungen von den Nennwerten der Knotenspannungen minimiert werden. Die Bestimmung der Knotenspannungen kann hierbei wiederum durch ein Verfahren des Maschinenlernens, das für eine gegebene Leistungsbilanz der Knoten die Knotenspannungen schätzt, erfolgen. Wenn Lösungen, die von dem evolutionären Verfahren berechnet werden, das zulässige Toleranzintervall verlassen, werden sie entweder verworfen oder im Sinne eines Straffunktionsverfahren in der Zielfunktion berücksichtigt.

Weiterhin ergeben sich zum erfindungsgemäßen Verfahren zum Ermitteln der Netztopologie gleichartige und gleichwertige Vorteile und Ausgestaltungen des erfindungsgemäßen Verfahrens zur Regelung des Stromnetzes.

Gemäß einer vorteilhaften Ausgestaltung der Erfindung umfasst das Verfahren wenigstens die weiteren Schritte:
- Erfassen von Messsignalen an mehreren Ortsnetzstationen des Stromnetzes; und
- Zuordnen wenigstens eines der Ortsnetzstationen zu dem räumlichen Segment der Steuerbox, wobei das Messsignal der zugeordneten Ortsnetzstation mit dem induzierten Leistungssignal die vergleichsweise stärkste Korrelation aufweist.

Mit anderen Worten werden zusätzlich Messsignale an Ortsnetzstationen, beispielsweise mittels Feldgeräten und/oder Edge-Devices, nach dem Induzieren des Leistungssignal, die im zeitlichen Zusammenhang mit dem Leistungssignal stehen, erfasst. Diese Messsignale werden wieder mit dem Leistungssignal jeweils korreliert, das heißt ihre jeweilige Korrelation mit dem Leistungssignal wird berechnet. Dadurch können die Ortsnetzstation und der Stromzähler der Steuerbox und somit dem jeweiligen räumlichen Segment zugeordnet werden. Mit anderen Worten ist dadurch bekannt, an welcher Ortsnetzstation der Stromzähler und die Steuerbox angeschlossen sind. Als Messsignale können Spannungen, Ströme und/oder Wirk- und/oder Blindleistungen erfasst werden. Weist die Ortsnetzstation mehrere Abgänge auf, so können die den Messsignalen zugrundeliegenden Messungen an einem oder mehrere der Abgänge durchgeführt werden.

In einer vorteilhaften Weiterbildung der Erfindung umfasst das Verfahren wenigstens die weiteren folgenden Schritte:
- Erfassen von Messsignalen an mehreren Abgängen der jeweiligen Ortsnetzstationen des Stromnetzes; und
- Zuordnen wenigstens eines der Abgänge eine der Ortsnetzstationen zu dem räumlichen Segment der Steuerbox, wobei das Messsignal des zugeordneten Abgangs mit dem induzierten Leistungssignal die vergleichsweise stärkste Korrelation aufweist.

Mit anderen Worten werden nach dem Einspeisen beziehungsweise Induzieren des Leistungssignal durch die Steuerbox mehrere Messung an den Abgängen der Ortsnetzstationen durchgeführt. Dadurch werden die Messsignale der Abgänge erfasst beziehungsweise bereitgestellt. Diese Messsignale werden wieder mit dem Leistungssignal korreliert, das heißt für jedes erfasste und/oder bereitgestellte Messsignal eines Abgangs wird die Korrelation zwischen diesem und dem Leistungssignal berechnet beziehungsweise ermittelt. Anschließend wird der Abgang dem Stromzähler beziehungsweise der Steuerbox zugeordnet, welcher die vergleichsweise stärkste Korrelation zwischen seinem Messsignal und dem Leistungssignal aufweist. Dadurch ist somit erfasst beziehungsweise ermittelt, an welcher Ortsnetzstation, an welchem Abgang welcher Stromzähler und welche Steuerbox angeschlossen ist.

Gemäß einer vorteilhaften Ausgestaltung der Erfindung weist das induzierte beziehungsweise durch die Steuerbox eingespeiste Leistungssignal eine Zeitdauer von wenigstens 15 Minuten aufweist.

Das ist deshalb von Vorteil, da typischerweise Stromzähler, Feldgeräte und/oder sonstige Messegeräte zur Erfassung eines Messsignals bezüglich der Spannung, des Stromes, der Wirk- und/oder Blindleistung an Knoten und/oder innerhalb von Leitungen des Stromnetzes, eine zeitliche Auflösung von 15 Minuten aufweisen. Dadurch ist sichergestellt, dass das eingespeiste Messsignal durch die jeweiligen Messungen beziehungsweise Messsignale erfasst oder beeinflusst wurde, sodass das Ermitteln einer Korrelation möglich ist.

In einer vorteilhaften Weiterbildung der Erfindung werden zum Einteilen des Stromnetzes in die räumlichen Segmente Luftaufnahmen des Stromnetzgebietes verwenden.

Typischerweise sind Siedlungsstrukturen auf Luftaufnahmen ausreichend gut zum Festlegen oder Ermitteln der räumlichen Segmente erkennbar. Mit anderen Worten erfolgt eine Segmentierung des Netzbereichs mittels Luftaufnahmen. Hierzu können Bildbearbeitungsverfahren zum weiteren Bearbeiten und Auswerten der Luftbilder beziehungsweise der Luftaufnahmen des jeweiligen Netzabschnittes vorgesehen sein. Bevorzugt werden die Segmente derart ermittelt, dass diese die abgebildete Fläche des Netzgebietes beziehungsweise des Netzabschnittes im Wesentlichen vollständig abdecken. Die Luftaufnahmen können mittels eines Luftfahrzeuges, insbesondere mittels eines Flugzeuges, eines Helikopters und/oder einer Drohne, erfasst und durch diese bereitgestellt werden. Insbesondere sind Luftaufnahmen mittels Satellit und Drohne besonders bevorzugt.

Gemäß einer bevorzugten Ausgestaltung der Erfindung werden als Stromzähler intelligente Stromzähler (Smartmeter) verwendet werden, die zu einer Spannungsmessung und/oder einer Wirk- und/oder Blindleistungsmessung an einer oder mehreren Phasen des Stromnetzes ausgebildet sind.

Vorteilhafterweise ermöglichen Smartmeter ein digitales Erfassen der Messsignale, beispielsweise mit Viertelstundenauflösung. Diese können mittels eines Zähler-Daten-Managements (englisch: Meter Data Management; MDM) für ein längeres Zeitintervall abgerufen werden an ein zentrales IT-System (zentrale Regelvorrichtung) zum Ermitteln der Netztopologie übermittelt oder für dieses bereitgestellt werden. Weiterhin weisen Smartmeter und/oder Edge-Devices typischerweise eine digital eindeutige Signatur (ID) auf, sodass bekannt ist, welches Gerät welches Messsignal erfasst hat.

In einer vorteilhaften Weiterbildung der Erfindung sind die Steuerboxen und/oder Feldgeräte zum Erfassen der Messsignale innerhalb der Ortsnetzstationen zur Spannungsmessung, zur Strommessung, Wirkleistungsmessung und/oder zur Blindleistungsmessung ausgebildet.

Insbesondere werden die Steuerungsbefehle für die Regelung basierend auf Messsignalen von Feldgeräten und/oder Edge Devices ermittelt.

Dadurch können vorteilhafterweise wichtige Größen des Stromnetzes erfasst und als Messsignale bereitgestellt werden. Diese ermöglichen weiterhin das Ausbilden beziehungsweise Berechnen von für die jeweiligen Zuordnungen vorteilhaften Korrelationen. Dadurch wird das Ermitteln der Netztopologie verbessert.

Weiterhin ist es bevorzugt, wenn die für ein räumliches Segment ermittelten Steuerungsbefehle an den Stromzähler und/oder die Steuerbox des räumlichen Segmentes übermittelt werden, wobei jede Steuerbox eine oder mehrere an das Stromnetz angebunden Anlagen, beispielsweise eine Anlage zum Laden eines Elektrofahrzeuges, des zugehörigen räumlichen Segmentes gemäß der übermittelten jeweiligen Steuerungsbefehlen bezüglich ihrer elektrischen Wirk- und/oder Blindleistung steuert.

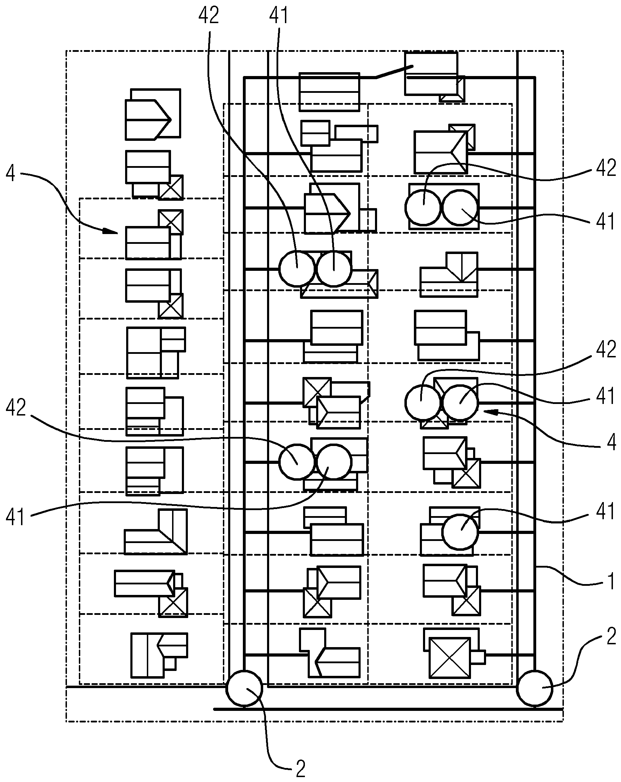

Weitere Vorteile, Merkmale und Einzelheiten der Erfindung ergeben sich aus den im Folgenden beschriebenen Ausführungsbeispielen sowie anhand der Zeichnung. Dabei zeigt die einzige Figur schematisiert ein Luftbild, mittels welchem eine Netztopologie eines Stromnetzes gemäß einer Ausgestaltung der vorliegenden Erfindung ermittelt wird.

Gleichartige, gleichwertige oder gleichwirkende Elemente können in der Figur mit denselben Bezugszeichen versehen sein. Die Figur zeigt schematische eine Luftaufnahme beziehungsweise ein Luftbild einer Wohnsiedlung. Auf dem Luftbild sind einzelnen Gebäudestrukturen beziehungsweise Siedlungsstrukturen erkennbar. Die Luftaufnahme wird beispielsweise durch eine Drohne oder durch einen Satelliten bereitgestellt. Auch eine Kombination verschiedener Luftaufnahmen, ebenfalls in verschiedenen Spektralbereichen, ist denkbar.

Gemäß der auf dem Luftbild erkannten Gebäudestrukturen können räumliche Segmente 4 ermittelt oder festgelegt werden. Jedes der räumlichen Segmente 4 umfasst im vorliegenden Ausführungsbeispiel ein Wohngebäude.

Die Wohngebäude sind an ein Stromnetz 1, insbesondere an ein Mittel- oder Niederspannungsnetz, angeschlossen. Mit anderen Worten weisen die räumlichen Segmente 4 einen Netzanschlusspunkt zum Stromnetz 1 auf.

Einige der Wohngebäude weisen ein Smartmeter 41 und eine Steuerbox 42 auf. Mit anderen Worten weisen mehrere Wohngebäude der Luftaufnahme ein Smartmeter 41 und eine Steuerbox 42 auf. Hierbei ist es somit nicht erforderlich, dass alle Wohngebäude auf der Luftaufnahme ein Smartmeter 41 oder eine Steuerbox 42 aufweisen. Es kann ebenfalls - wie dargestellt - ein Wohngebäude lediglich ein Smartmeter 41 und keine Steuerbox 42 aufweisen. Anhand der Luftaufnahme ist jedoch zunächst nicht erkennbar, welches der Wohngebäude ein Smartmeter 41 und/oder eine Steuerbox 42 aufweisen. Die vorliegende Ausgestaltung der Erfindung ermöglicht es jedoch Steuerboxen 42 und zugehörige Smartmeter 42 sowie das zugehörige räumliche Segment 4 zu ermitteln.

Typischerweise speichern die Steuerboxen 42 ihren Standort mittels zugehöriger Geodaten. Mit anderen Worten ist typischerweise der Standort der Steuerboxen 42 bekannt. Demnach kann ermittelt werden, welches der räumlichen Segmente 4 eine Steuerbox 42 aufweist beziehungsweise welchem räumlichen Segment 4 die jeweilige Steuerbox 42 zugeordnet ist. Exemplarisch sind in der Figur vier räumliche Segmente 4 dargestellt, die eine Steuerbox 42 umfassen.

Weiterhin weist das Stromnetz 1 mehrere Feldgeräte, insbesondere Edge-Devices 2, auf. Die Edge-Devices 2 sind typischerweise keinem spezifischen räumlichen Segment 4 zugeordnet, sondern sind sinnbildlich am Rand (englisch: Edge) des Stromnetzes 1 angeordnet, beispielsweise innerhalb von Ortsnetzstationen.

Gemäß der vorliegenden Ausgestaltung der Erfindung wird mittels einer der Steuerboxen 42, die einem der räumlichen Segmente zugeordnet ist, ein zeitliches Leistungssignal erzeugt und in das Stromnetz 1 eingespeist. Mit anderen Worten induziert die Steuerbox 42 ein Leistungsprofil. Dieses kann sinnbildlich als Fingerabdruck der jeweiligen Steuerbox 42 aufgefasst werden. Das induzierte Leistungssignal breitet sich im Stromnetz 1 aus und wird somit ebenfalls durch die weiteren Komponenten/Geräte, das heißt vorliegend durch die Smartmeter 41 und durch die Edge-Devices 2 durch Messungen erfasst. Die Messungen der Smartmeter und der Edge-Devices erfolgen typischerweise mit einer zeitlichen Auflösung von 15 Minuten, sodass ein Leistungssignal mit einer Zeitdauer größer oder gleich 15 Minuten vorteilhaft ist. Durch die Messungen der Smartmeter 41 und der Edge-Devices werden jeweilige Messsignale bereitgestellt. Beispielsweise werden die erfassten Messsignale, die Geodaten der Steuerboxen 42 an eine zentrale Regelvorrichtung, die zur Regelung des Stromnetzes 1 ausgebildet ist, übermittelt. Die Regelvorrichtung kann ebenfalls die Luftaufnahmen und somit die Information über die räumlichen Segmente 4 gespeichert umfassen. Die zentrale Regelvorrichtung ist somit zur Ermittlung der Netztopologie im Sinne der vorliegenden Erfindung und/oder einer ihrer Ausgestaltungen ausgebildet.

Innerhalb der erfassten Messsignale ist das durch die Steuerbox 42 eingespeiste Leistungssignal typischerweise nicht ohne weitere erkennbar beziehungsweise ermittelbar. Gemäß der vorliegenden Erfindung wird die jeweilige Korrelation der erfassten Messsignale mit dem induzierten Leistungssignal berechnet. Daraus ergibt sich unter den Messsignalen der Smartmeter 41 ein Messsignal, welches mit dem Leistungssignal unter allen erfassten oder übermittelten Messignalen die stärkste Korrelation mit dem induzierten Leistungssignal aufweist. Da typischerweise eindeutig ist, beispielsweise über eine ID, welches Messsignal von welchem Smartmeter 41 erfasst wurde, kann somit das Smartmeter 41 mit der stärksten Korrelation der Steuerbox 42, die das Leistungssignal eingespeist hat, zugeordnet werden. Dadurch ist ermittelt, welches Smartmeter 41 elektrotechnisch der Steuerbox 42, die das Leistungssignal eingespeist hat, zugeordnet ist.

Weiterhin ist zur Steuerbox 42 ein räumliches Segment 4 zugehörig, sodass insgesamt ermittelt ist, welche Steuerbox 42 und welches Smartmeter 41 welchem räumlich Segment 4 zugeordnet beziehungsweise in diesem angeordnet ist.

Wird das obenstehend beschriebene Verfahren für mehrere Steuerboxen 42 durchgeführt, so kann jeder Steuerbox 42 ein Smartmeter 41 zugeordnet werden. Ist kein Smartmeter 41 einer Steuerbox 42 zugeordnet, so lässt sich dies ebenfalls aus der Korrelation ermitteln.

Analog zur Zuordnung der Smartmeter 41 zu den Steuerboxen 42 können Feldgeräte, die Edge-Devices 2 und/oder die Ortsnetzstationen und/oder deren Abgänge über zugehörige erfasste Messsignale und durch ein Ausbilden von Korrelationen mit dem induzierten Leistungssignal der Steuerbox 42, die das Leistungssignal eingespeist hat, zugeordnet werden.

Zusammenfassend kann durch die Luftaufnahmen eines Teils des Netzgebietes, durch die Segmentierung der Luftaufnahme gemäß der Siedlungsstruktur und die Geodaten der Steuerboxen 42, durch das Einspeisen des Leistungssignals durch eine der Steuerboxen 42, durch die erfassten Messignale der jeweiligen elektrotechnischen Geräte, insbesondere der Smartmeter 41 und der Edge-Devices 2, und durch Ermitteln der jeweiligen zeitlichen Korrelationen, insbesondere der Kreuzkorrelationen, mit dem induzierten Leistungssignal die Netztopologie des Stromnetzes 1 wenigstens teilweise ermittelt werden.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Stromnetz
- 2: zweiter Schritt
- 4: räumliches Segment
- 41: Smartmeter
- 42: Steuerbox

## Patentansprüche

1. Verfahren zur Ermittlung einer Netztopologie eines Stromnetzes (1), insbesondere eines Mittel- und/oder Niederspannungsnetzes, an welchem mehrere Stromzähler (41) sowie mehrere Steuerboxen (42) angebunden sind, wobei die Steuerboxen (42) jeweils zugehörige Geodaten aufweisen, **gekennzeichnet durch** die Schritte:
- Einteilen des Stromnetzes (1) in mehrere räumliche Segmente (4);
- Zuordnen wenigstens einer der Steuerboxen (42) zu einem der räumlichen Segmente (4) mittels seiner Geodaten;
- Induzieren eines zeitlichen Leistungssignals in das Stromnetz (1) mittels der zugeordneten Steuerbox (42);
- Erfassen von Messsignalen der Stromzähler (41); und
- Zuordnen wenigstens eines der Stromzähler (41) zu dem räumlichen Segment (4) der Steuerbox (42), wobei das erfasste Messsignal des zugeordneten Stromzählers (41) mit dem induzierten Leistungssignal die vergleichsweise stärkste Korrelation aufweist.

2. Verfahren gemäß Anspruch 1, **gekennzeichnet durch** die weiteren Schritte:
- Erfassen von Messsignalen an mehreren Ortsnetzstationen (2) des Stromnetzes (1); und
- Zuordnen wenigstens eines der Ortsnetzstationen (2) zu dem räumlichen Segment (4) der Steuerbox (42), wobei das Messsignal der zugeordneten Ortsnetzstation (2) mit dem induzierten Leistungssignal die vergleichsweise stärkste Korrelation aufweist.

3. Verfahren gemäß Anspruch 2, **gekennzeichnet durch** die weiteren Schritte:
- Erfassen von Messsignalen an mehreren Abgängen der jeweiligen Ortsnetzstationen (2) des Stromnetzes (1); und
- Zuordnen wenigstens eines der Abgänge eine der Ortsnetzstationen (2) zu dem räumlichen Segment (4) der Steuerbox (42), wobei das Messsignal des zugeordneten Abgangs mit dem induzierten Leistungssignal die vergleichsweise stärkste Korrelation aufweist.

4. Verfahren gemäß einem der vorhergehenden Ansprüche, **gekennzeichnet dadurch, dass** das induzierte Leistungssignal eine Zeitdauer von wenigstens 15 Minuten aufweist.

5. Verfahren gemäß einem der vorhergehenden Ansprüche, **gekennzeichnet dadurch, dass** zum Einteilen des Stromnetzes (1) in die räumlichen Segmente (4) Luftaufnahmen des Stromnetzgebietes verwenden werden.

6. Verfahren gemäß einem der vorhergehenden Ansprüche, **gekennzeichnet dadurch, dass** als Stromzähler (41) intelligente Stromzähler verwendet werden, die zu einer Spannungsmessung und/oder einer Wirk- und/oder Blindleistungsmessung an einer oder mehreren Phasen des Stromnetzes (1) ausgebildet sind.

7. Verfahren gemäß einem der vorhergehenden Ansprüche, **gekennzeichnet dadurch, dass** Steuerboxen (42) und/oder Feldgeräte (2) zum Erfassen der Messsignale innerhalb der Ortsnetzstationen (2) zur Spannungsmessung, zur Strommessung, Wirkleistungsmessung und/oder zur Blindleistungsmessung ausgebildet sind.

8. Verfahren zur Regelung eines Stromnetzes (1), insbesondere eines Mittel- und/oder Niederspannungsnetzes, **gekennzeichnet dadurch, dass** das Stromnetz (1) gemäß einer nach einem der vorhergehenden Ansprüche ermittelten Netztopologie in räumliche Segmente (4) mit zugehörigen Stromzählern (41) und Steuerboxen (42) eingeteilt wird, wobei das Regeln mittels für die räumlichen Segmente (4) jeweils vorgesehenen Steuerungsbefehlen erfolgt, die derart ermittelt werden, dass Spannungsdifferenzen zwischen elektrotechnisch aufeinander folgenden räumlichen Segmenten (4) kleiner oder gleich einem Schwellenwert sind.

9. Verfahren gemäß Anspruch 8, **gekennzeichnet dadurch, dass** die Steuerungsbefehle basierend auf Messsignalen von Feldgeräten (2) ermittelt werden.

10. Verfahren gemäß Anspruch 8 oder 9, **gekennzeichnet dadurch, dass** die für ein räumliches Segment (4) ermittelten Steuerungsbefehle an den Stromzähler (41) und/)der die Steuerbox (42) des räumlichen Segmentes (42) übermittelt werden, wobei jede Steuerbox (42) eine oder mehrere an das Stromnetz (1) angebunden Anlagen des zugehörigen räumlichen Segmentes (4) gemäß der übermittelten jeweiligen Steuerungsbefehlen bezüglich ihrer elektrischen Wirk- und/oder Blindleistung steuert.
